Europäisches Patentamt

European Patent Office

Office européen des brevets

(11) Veröffentlichungsnummer: **0 265 625**
**A2**

(12) **EUROPÄISCHE PATENTANMELDUNG**

(21) Anmeldenummer: **87112530.8**

(22) Anmeldetag: **28.08.87**

(51) Int. Cl.⁴: **B01D 21/24**

(30) Priorität: **28.10.86 DE 3636619**

(43) Veröffentlichungstag der Anmeldung:
**04.05.88 Patentblatt 88/18**

(84) Benannte Vertragsstaaten:
**AT BE CH DE ES FR GB IT LI NL SE**

(71) Anmelder: **Gradewald, Reinhold**
**Pinneberger Strasse 90**
**D-2000 Wedel/Holstein(DE)**

(72) Erfinder: **Gradewald, Reinhold**
**Pinneberger Strasse 90**
**D-2000 Wedel/Holstein(DE)**

(54) **Absaugeinrichtung zum Aufbereiten von Reinigungsflüssigkeiten.**

(57) Die Erfindung betrifft eine Absaugeinrichtung zum Filtern der Reinigungsflüssigkeit von Reinigungsbädern. Die Absaugung erfolgt über eine durch einen Auftriebskörper an der Oberfläche der Reinigungsflüssigkeit gehaltenen Saugdüse (1) mit einer Saugkammer (15). Diese weist eine Überlaufschwelle (18) auf, di e durch den Auftriebskörper in Form einer unten offenen Luftkammer (17) in vorgebbaren Abstand unter der Oberfläche der Reinigungsflüssigkeit gehalten wird. Die Saugkammer (15) setzt sich nach unten in einem Anschlußstutzen (16) fort, der teleskopartig auf ein senkrecht aufragendes, mit dem Saugstutzen einer Umwälzpumpe (11) in Verbindung stehendes Anschlußrohr (28) aufgeschoben ist.

Fig. 1

## Absaugeinrichtung zum Aufbereiten von Reinigungsflüssigkeit

Die Erfindung betrifft eine in einen Filterkreislauf einbezogene Absaugeinrichtung zum Filtern der Reinigungsflüssigkeit von Reinigungsbädern, mit einer durch Auftriebskörper an der Oberfläche der in einem Behälter befindlichen Reinigungsflüssigkeit gehaltenen Saugdüse zum Absaugen der Oberschicht der Reinigungsflüssigkeit, insbesondere zum Abziehen aufschwimmender Stoffe von deren Oberfläche, zum Entfernen technischen Teilen anhaftender Rückstände, beispielsweise aus der Fertigung stammender fetthaltiger Mittel, wobei die Loslösung dieser Rückstände auf mechanischem Wege, beispielsweise unter Anwendung von Ultraschall erfolgt, welcher in die die zu behandelnden Teile aufnehmende Flüssigkeit eingeleitet wird.

Eine dem Erfindungsbetreff entsprechende Einrichtung ist aus dem praktischen Stand der Technik bekannt. Die in dieser Einrichtung installierte Umwälzanlage hat die Aufgabe, die von den zu behandelnden Teilen abgelösten Rückstände zum Aufschwimmen zu bringen und mit den auf natürliche Weise aufschwimmenden einem Absaugrohr zuzuleiten, dessen Saugöffnungen in geeignetem Abstand unterhalb des Flüssigkeitsspiegels einstellbar sind, zu welchem Zweck die Halterung des Saugrohres eine Ausgestaltung hat, die eine entsprechende Einstellung ermöglicht. Die zu behandelnden Teile werden in einem Tauchkorb gelagert, welcher in den Behälter einbringbar ist. Aufgrund des Verdrängervolumens der eingebrachten Teile ergibt sich nun, daß der Flüssigkeitsspiegel durch das Einsetzen bzw. Herausnehmen des Tauchkorbes Schwankungen unterworfen ist, die den Absaugvorgang beeinträchtigen, der nur dann optimal verläuft, wenn einerseits das Absaugen der Rückstände gewährleistet ist und andererseits das Einziehen von Luft vermieden wird. Der letztgenannten Forderung kommt dabei besondere Bedeutung zu, da jedwede Gasbeimischung zur Schaumbildung und damit zum Zusammenbruch des Umwälzkreislaufes führt, so daß der Arbeitsprozeß unterbrochen werden muß, bis die Schambildung beendet ist. Dieser Zustand kann sehr leicht bei unaufmerksamer Bedienung der Einrichtung eintreten, nämlich schon beispielsweise dann, wenn der Tauchkorb aus dem Behälter gehoben wird, bevor die Umwälzeinrichtung abgeschaltet wurde. Denn dies hat zur Folge, daß der Flüssigkeitsspiegel infolge der Entnahme der behandelten Teile fällt, so daß des nach dem Einsetzen des Tauchkorbes auf den erhöhten Stand der Flüssigkeit eingestellte Saugrohr aus dieser zumindest teilweise austauchen kann. Abgesehen davon ist Bedienung der bekannten Einrichtung aufgrund der erforderlichen Bedienungsschritte recht umständlich.

Eine ähnliche Einrichtung ist aus der US-PS 2.828.231 bekannt. Sie zeigt eine Ultraschall-Reinigungseinrichtung mit einem inneren Behälter, der die Reinigungsflüssigkeit aufnimmt, in welche ein Korb mit den zu reinigenden Teilen eingetaucht wird.. Die Reinigungsflüssigkeit wird dauernd über eine Zuleitung zugeführt und mittels eines Überlaufs abgeleitet, der in festem Abstand zum Behälterrand angeordnet ist. Eine automatische Anpassung des Überlaufs an einen schwankenden Flüssigkeitsstand erfolgt hier ebenfalls nicht, so daß bei Verwendung einer Absaugung das Einziehen von Luft unvermeidbar ist.

Aus der DE-AS 1 111 o21 ist weiter ein Schwimmfilter mit einer Schwimmkammer und einer Saugkammer bekannt, welche am Ende Ansaugschlauches angeordnet ist. Diese Einrichtung dient der Absaugung von Flüssigkeiten unter weitgehender Vermeidung der Mitnahme von am Grunde abgesetzten Feststoffen. Eine solche Einrichtung eignet sich zwar zum Abpumpen von Flüssigkeiten, nicht jedoch zum Abziehen eines sich auf der gesamten Oberfläche verbreitenden Fettfilms.

Es ist daher die Aufgabe der Erfindung, eine zum Absaugen der Oberflächenschicht einer Reinigungsflüssigkeit geeignete Saugdüse vorzuschlagen, welche einem schwankenden Flüssigkeitsstand ohne Behinderung und praktisch verzögerungsfrei zu folgen vermag und auf einfachste Weise entnehm-bzw. einsetzbar ist.

Diese Aufgabe wird erfindungsgemäß dadurch gelöst, daß die Saugdüse aus einer unmittelbar unter der Oberfläche der Reinigungsflüssigkeit - schwebend gehaltenen Saugkammer mit mindestens einer Saugöffnung besteht, und daß die Saugkammer einen mit deren Hohlraum in Verbindung stehenden senkrechten Anschlußstutzen aufweist, welcher teleskopartig mit einem mit dem Sauganschluß einer Umwälzeinrichtung verbundenen, in dem Behälter aufragenden Anschlußrohr korrespondiert. Die damit erzielbaren Vorteile bestehen insbesondere in der außerordentlich feinfühligen Einhaltung der vorgegebenen, als optimal ermittelten Eintauchverhältnisse, so daß auch bei starken Niveauschwankungen der Reinigungsflüssigkeit das Ansaugen von Luft sicher vermieden wird. Diese Sicherheit ermöglicht außerdem, die Umwälzpumpe auch beim Entladen aktiviert zu halten, so daß sich aufgrund der Vermeidung häufiger Schaltwechsel der Umwälzpumpe neben einer Durchsatzsteigerung auch ein energetischer Vorteil ergibt.

Als besonders effizient erweist sich eine Saugdüse, deren Saugkammer als oben offener, sich horizontal längser streckender Hohlkörper ausgebildet ist, welcher mindestens an einer Längsseite eine Überlaufschwelle aufweist, welche mittels des Auftriebskörpers unmittelbar unter dem Flüssigkeitsspiegel dur Reinigungsflüssigkeit gehalten wird. Der Auftriebskörper kann dabei eine nach unten offene, sich entsprechend der Saugkammer längserstreckend geformte Luftkammer aufweisen, welche der Langseite der Saugkammer zugeordnet ist, wodurch sich in Verbindung mit einer Anordnung des mit dem Hohlraum der Saugkammer verbundenen senkrechten Anschlußstutzens etwa im Schwerpunkt des Systems aus Saugkammer und Luftkammer ergibt, daß sich die Überlaufschwelle der Saugkammer exakt parallel zur Oberfläche der Reinigungsflüssigkeit ausrichtet und die Teleskopverbindung frei von deren Gleitbeweglichkeit behindernden Eckkräften gehalten wird. Eine Verdrehung der Saugdüse kann dadurch unterbunden werden, daß der mit dem Hohlraum der Saugkammer in Verbindung stehende senkrechte Anschlußstutzen rechteckigen Querschnitt aufweist. Eine fertigungstechnische Optimierung bei der Herstellung der Saugdüse läßt sich dadurch erreichen, daß dieselbe aus einem thermoplastischen Kunststoff gefertigt ist. Dabei hat sich als besonders günstig erwiesen, wenn sowohl die Luftkammer, als auch die Saugkammer im Tiefziehverfahren, letztere unter Einbeziehung eines Teils des senkrechten Anschlußstutzens hergestellt und mit einem ebenen Bauteil durch Klebung zu der Baueinheit Saugdüse gefügt sind. Eine strömungstechnisch günstige, der Absauggeschwindigkeit zugute kommende Ausführung ergibt sich, wenn die Luftkammer mindestens eine Durchströmöffnung zwecks Hinleitung der längs der Rückseite der Luftkammer verlaufenden Strömung in die Saugkammer aufweist. Insbesondere beim Anfahren der Umwälzpumpe besteht infolge trägen Nachstömens der Reinigungsflüssigkeit die Gefahr, daß die Saugkammer kurzzeitig leergesaugt wird und damit Luft in den Kreislauf gelangen kann. Das kann wirkungsvoll dadurch vermieden werden, daß die Saugkammer unmittelbar unterhalb der Überlaufschwelle mindestens einen Durchbruch aufweist, welcher von innen durch eine unter geringem federndem Andruck gehaltene Ventilklappe abgedeckt wird. Schließlich ermöglichen an der Luftkammer angeordnete Mittel zum Einstellen der Eintauchtiefe eine einfache Anpassung derselben an die jeweiligen Erfordernisse und Gegebenheiten.

Die Erfindung wird nachfolgend anhand eines in der Zeichnung dargestellten Ausführungsbeispiels näher erläutert. Es zeigt

Fig. 1 ein Zerfallbild der Saugdüse in axonometrischer Darstellung,

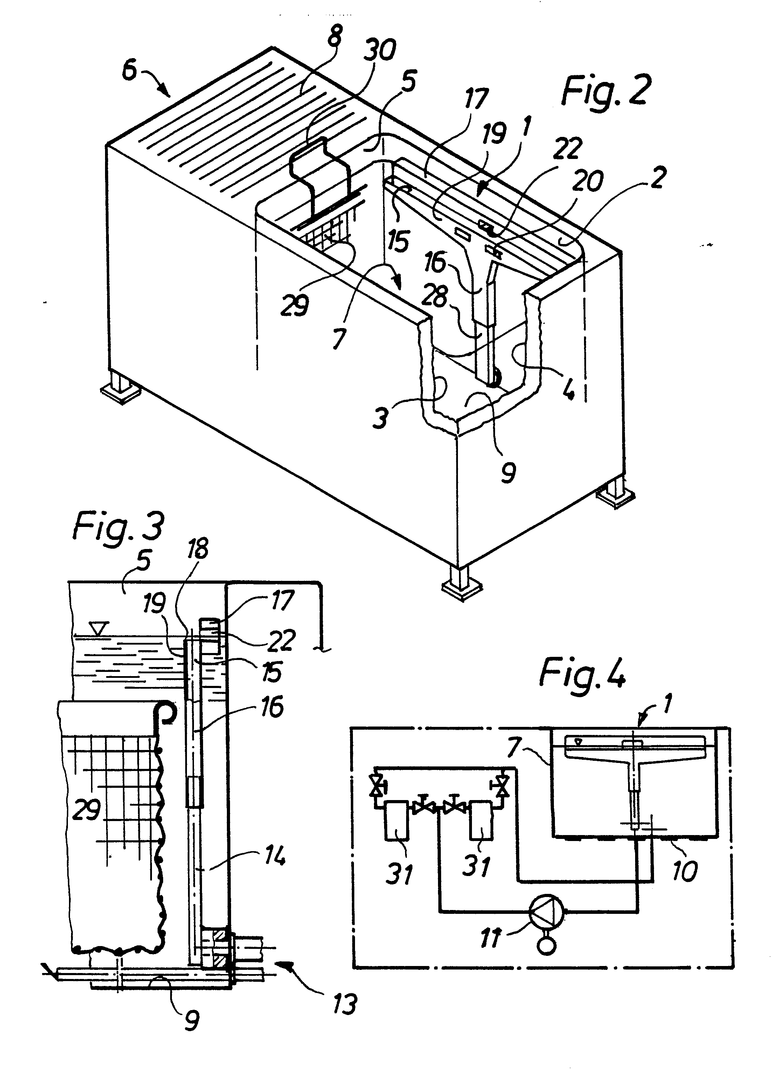

Fig. 2 eine Gesamtansicht der Einrichtung in axonometrischer Darstellung mit Teileinsicht in den Behälter,

Fig. 3 einen Teilquerschnitt durch den Behälter mit eingehängtem Tauchkorb,

Fig. 4 einen Stromlaufplan des Umwälzkreislaufs.

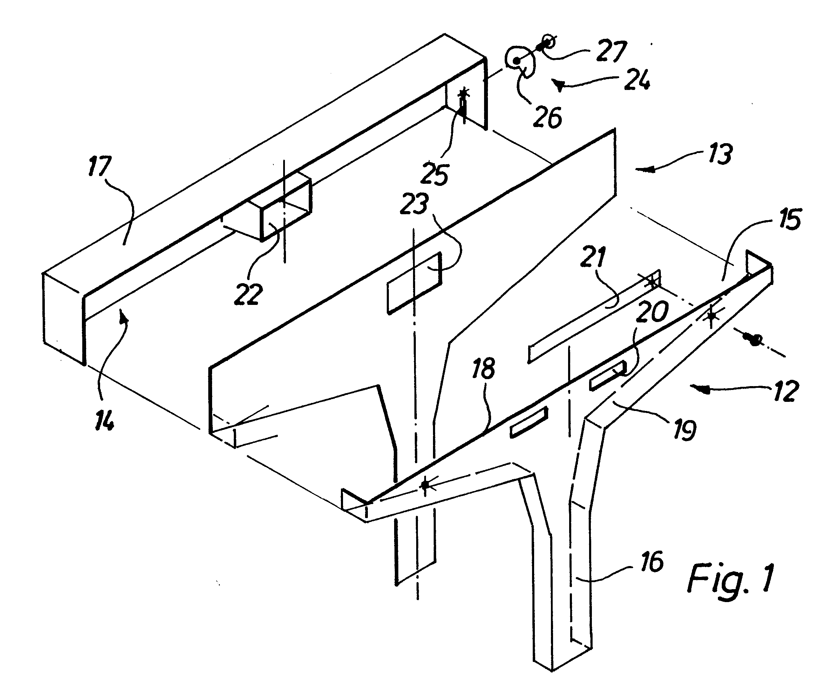

Die erfindungsgemäße Saugdüse 1 wird beispielsweise in einer Einrichtung zum Reinigen eingesetzt, die im wesentlichen die Gestalt eines Spültisches mit Unterschrank hat, welcher seine quaderförmige Raumform durch ein nicht gezeigtes Gestell erhält, das mittels die Abschlußwände 2 bis 5 bildender Bleche verkleidet ist, In die den oberen Abschluß bildende Tischfläche 6 ist außermittig ein mit Reinigungsflüssigkeit auffüllbarer Behälter 7 eingelassen, während der verbleibende Teil der Tischfläche 6 als Ablagefläche 8 nutzbar ist. Die Bodenfläche 9 des Behälters 7 ist in bekannter Weise mit Ultraschall-Erregerelementen 1o versehen. Der Behälter 7 ist in einem offenen Umwälzkreislauf einbezogen, welcher durch eine auf geeignete Weise angetriebene, in dem Gestell untergebrachte Umwälz pumpe 11 aufrechterhalten wird. Die der Entnahme der Reinigungsflüssigkeit durch die Umwälzpumpe 11 dienende Absaugeinrichtung wird durch die erfindungsgemäße Saugdüse 1 gebildet. Diese besteht gemäß Fig. 1 aus drei KunststoffBauteilen 12,13,14, die im Klebeverfahren entsprechend der Umkehrung der dargestellten Zerfallrichtung zu der Baueinheit Saugdüse gefügt werden, wobei mit dem Bauteil 13 einerseits eine oben offene Saugkammer 15 mit einem Anschlußstutzen 16, und andererseits eine Luftkammer 17 gebildet wird. Die Saugkammer 15 weist in ihrem oberen Bereich eine Überlaufschwelle 18 auf, die den oberen Abschluß einer Wand 19 bildet , in der unmittelbar unterhalb der Überlaufschwelle 18 Durchbrüche 2o angeordnet sind, welche von innen durch unter geringem federnden Andruck stehende Ventilklappen 21 in Form von Bandstahlabschnitten abgedeckt werden. Die Luftkammer 17 ist nach unten offen und weist in der Mitte der Lämgsausdehnung der Kammer eine diese etwa horizontal durchsetzende - schachtartige Durchströmöffnung 22 auf, die mit einer entsprechenden Ausnehmung 23 in dem Bauteil 13 fluchtet. An einer Stirnseite der Luftkammer 17 ist als Mittel 24 zum Einstellen der Eintauchtiefe derselben eine schlitzförmige Öffnung 25 angebracht, welche durch eine mit einer Schraube 27 fixierbare Scheibe 26 mit Spiralkontur partiell abdeckbar ist. In Funktionsstellung wird die Saugdüse 1 mit ihrem Anschlußstutzen 16 teleskoparfig auf ein von der Bodenfläche 9 des Behälters 7 senkrecht aufragendes, mit dem Saugstutzen der Umwälzpumpe 11 in Verbindung stehendes Anschlußrohr 28 rechteckigen Querschnitts aufgeschoben.

Die Vorgehensweise bei der Inbetriebnahme der Einrichtung ist folgende:

Zunächst wird der Behälter 7 mit Reinigungsflüssigkeit von nach Bedarf alkalischer bis saurer Einstellung aufgefüllt. Vorher wurde zweckmäßigerweise die Saugdüse 1 durch Abziehen von dem Anschlußrohr 27 entfernt und die Ümwälzpumpe 11 abgeschaltet. Nach Erreichen des gewünschten Flüssigkeitsstandes wird die Saugdüse 1 durch Überstülpen ihres Anschlustutzens 16 über das Anschlußrohr 27 eingesetzt, wobei die Saugdüse 1 in die Flüssigkeit eintaucht, bis die Luftkammer 17 eine die Gewichtskraft der Einheit ausgleichende Auftriebskraft erzeugt. Dieser Gleichgewichtszustand ist aufgrund der Dimensionierung der Luftkammer 17 dann erreicht, wenn die Überlaufschwelle 18 der Saugdüse 1 unter dem Flüssigkeitsspiegel in einem Abstand liegt, der gerade sicher verhindert, daß Luft eingesaugt wird. Nach diesen Vorbereitungen kann die Umwälzpumpe 11 aktiviert und die Ultraschall-Erregerelemente 1o und gegebenenfalls eine Heizeinrichtung eingeschaltet werden, so daß sich die eingestellten Betriebsbedingungen einpendeln können. Infolge der Absaugung und Wiederzuführung der Reinigungsflüssigkeit entsteht nun eine Umwälzströmung, die an der Rückwand 2 absteigend über die Bodenfläche 9 verläuft und an der Vorderwand 3 aufsteigend über den Flüssigkeitsspiegel zu der Saugdüse 1 gerichtet ist. Diese Strömung führend wirkt dabei auch der in die Flüssigkeit eintauchende Teil der Luftkammer 17, deren Anordnung auch im Hinblick darauf getroffen ist. Nach Erreichen der Betriebsbedingungen kann nun die Bedienungsperson mit der Beschickung beginnen. Zu diesem Zweck wird ein vorzugsweise aus stabilem Drahtgeflecht bestehender Tauchkorb 29 mit zu reinigenden Werkstücken beladen und in den Behäter7 eingesetzt, bis die Traggriffe 2o desselben auf dem Behälterrand zur Auflage kommen. Dabei steigt, verursacht durch das Verdrängervolomun der zu behandelnden Teile und des Tauchkorbes 29 der Flüssigkeitsspiegel, ohne daß dadurch jedoch die Eimtauchtiefe der Saugdüse 1 verändert wird, da diese vermittels ihrer Luftkammer 17 in zu dem Flüssikeitsspiegel konstantem Abstand gehalten wird. Die aufgrund der Einwirkung der Ultraschallschwingungen und eventuell auch chemischer Reaktion sich von der Oberfläche der Werstükke ablösenden Verunreinigungen werden mit dem Umwälzstrom in den Bereich der Überlaufschwelle 18 der Saugkammer 15 getrieben und dort gemeinsam mit Reinigungsflüssigkeit abgesaugt. Das abgesaugte Gemisch wird über Filter 31 geleitet und die gereinigte Reinigungsflüssigkeit dem Behälter 7 wieder zugeführt. Nach Beendigung des Reinigungsprozesses wird der Tauchkorb 29 entnommen, wobei der Flüssigkeitsspiegel entsprechend dem vorherigen Anstieg fällt und die Saugdüse 1 mitnimmt, da deren Luftkammer 17 den Gleichgewichtszustand zur Gewichtskraft der Saugdüse 1 sucht.

**Ansprüche**

1. In einem Filterkreislauf einbezogene Absaugeinrichtung zum Filtern dr Reinigungsflüssigkeit von Reinigungsbädern, mit einer durch Auftriebskörper an der Oberfläche der in einem Behälter befindlichen Reinigungsflüssigkeit gehaltenen Saugdüse zum Absaugen der Oberschicht der Reinigungsflüssigkeit, insbesondere zum Abziehen aufschwimmender Stoffe von deren Oberfläche, zum Entfernen technischen Teilen anhaftender Rückstände, beispielsweise aus der Fertigung stammender fetthaltiger Mittel, wobei die Loslösung dieser Rückstände auf mechanischem Wege ,beispielsweise durch Anwendung von Ultraschall erfolgt, welcher in die die zu behandelnden Teile aufnehmende Flüssigkeit eingeleitet wird, **dadurch gekennzeichnet,** daß die Saugdüse (1) aus einer unmittelbar unter der Oberfläche der Reinigungsflüssigkeit schwebend gehaltenen Saugkammer (15) mit mindestens einer Saugöffnung besteht, und daß die Saugkammer (15) einen mit deren Hohlraum in Verbindung stehenden senkrechten Anschlußstutzen (16) aufweist, welcher teleskopartig mit einem mit dem Sauganschluß einer Umwälzeinrichtung verbundenen, in dem Behälter (7) aufragenden Anschlußrohr (28) korrespondiert.

2. Absaugeinrichtung nach Anspruch 1, **dadurch gekennzeichnet,** daß die Saugkammer (15) als oben offener, sich horizontal längserstreckender Hohlkörper ausgebildet ist, welcher mindestens an einer Längsweite eine Überlaufschwelle (18) aufweist, welche mittels des Auftriebskörpers unmittelbar unter dem Flüssigkeitsspiegel der Reinigungsflüssigkeit gehalten wird.

3. Absaugeinrichtung nach einem der Ansprüche 1 oder 2, **dadurch gekennzeichnet,** daß der Auftriebskörper eine nach unten offene, sich entsprechend der Saugkammer (15) längserstreckend geformte Luftkammer (17) aufweist, welche der Langseite der Saugkammer (15) zugeordnet ist.

4. Absaugeinrichtung nach einem der Ansprüche 1 bis 3, **dadurch gekennzeichnet,** daß der mit dem Hohlraum der Saugkammer (15) in Verbindung stehende senkrechte Anschlußstutzen (16) etwa in Schwerpunkt des Systems aus Saugkammer (15) und Luftkammer (17) angeordnet ist.

5. Absaugeinrichtung nach einem der Ansprüche 1 bis 4, **dadurch gekennzeichnet,** daß der mit dem Hohlraum der Saugkammer (15) in Verbindung stehende senkrechte Anschlußstutzen (16) rechteckigen Querschnitt aufweist.

6. Absaugeinrichtung nach einem der Ansprüche 1 bis 5, **dadurch gekennzeichnet,** daß die Saugdüse (1) aus einem thermoplastischen Kunststoff gefertigt ist.

7. Absaugeinrichtung nach Anspruch 6, **dadurch gekennzeichnet,** daß sowohl die Luftkammer (17), als auch die Saugkammer (15) im Tiefziehverfahren, letztere unter Einbeziehung eines Teils des senkrechten Anschlußstutzens (16) hergestellt und mit einem ebenen Bauteil (13) durch Klebung zu der Baueinheit Saugdüse (1) gefügt sind.

8. Absaugeinrichtung nach Anspruch 7, **dadurch gekennzeichnet,** daß die Luftkammer (17) mindestens eine Durchströmöffnung (22) zwecks Hinleitung der längs der Rückseite der Luftkammer (17) verlaufenden Strömung in die Saugkammer (15) aufweist.

9. Absaugeinrichtung nach einem der vorangehenden Ansprüche, **dadurch gekennzeichnet,** daß die Saugkammer (15) ummittelbar unterhalb der Überlaufschwelle (18) mindestens einen Durchbruch (2o) aufweist, welcher von innen durch eine unter geringem federnden Andruck gehaltene Ventilklappe (21) abgedeckt wird.

10. Absaugeinrichtung nach einem der vorangehenden Ansprüche, **dadurch gekennzeichnet,** daß die Luftkammer (17) Mittel (24) zum Einstellen ihrer Eintauchtiefe aufweist.

Fig. 1

Fig. 2

Fig. 3

Fig. 4